Europäisches Patentamt

European Patent Office

Office européen des brevets

(11) Publication number: **0 035 905**
**B1**

(12) **EUROPEAN PATENT SPECIFICATION**

(45) Date of publication of patent specification: **28.11.84**

(51) Int. Cl.³: **B 05 C 15/00, B 01 D 45/10**

(21) Application number: **81300984.2**

(22) Date of filing: **10.03.81**

(54) Spray booth and method of operating same.

(30) Priority: **11.03.80 US 129484**
**09.02.81 US 232124**

(43) Date of publication of application:
**16.09.81 Bulletin 81/37**

(45) Publication of the grant of the patent:
**28.11.84 Bulletin 84/48**

(84) Designated Contracting States:
**AT BE CH DE FR GB IT LI NL SE**

(56) References cited:
**FR-A-1 192 088**
**GB-A- 710 173**
**US-A-2 694 466**
**US-A-3 018 847**
**US-A-3 475 202**
**US-A-3 932 151**

(73) Proprietor: **PROTECTAIRE SYSTEMS COMPANY**
**1353 McLean Boulevard**
**Elgin Illinois (US)**

(72) Inventor: **Napadow, Stanley Charles**
**543 North Hilltop**
**Elgin Illinois (US)**

(74) Representative: **Bayliss, Geoffrey Cyril et al**
**BOULT, WADE & TENNANT 27 Furnival Street**
**London EC4A 1PQ (GB)**

Courier Press, Leamington Spa, England.

EP 0 035 905 B1

## Description

The present invention relates to air cleaning systems and methods and more particularly to a spray booth having an air cleaning system to remove airborne particles to alleviate contamination of the surrounding atmosphere.

Spray booths are used for various purposes and generate airborne particles which are usually removed by some form of filtering equipment before the air from the spray booth is discharged. By way of example only, the present invention will be described in connection with a spray booth for painting articles. Spray painting is a procedure which is both dirty and hazardous in that particles of obnoxious and/or toxic substances are widely dispersed through the air. Spray in the absence of adequate filtering apparatus results in an environment which is unhealthy to workers, and may result in contamination of the larger environment around such a plant. The need to protect workers as mandated by government regulations requires that spray painting be carried out in booths in which the contaminated paint laden air is directed away from the workers and filtered to remove paint particles therefrom. Dry filter methods and wet filter methods have previously been used to clean air in spray painting booths.

Dry filters have perhaps proven the most effective in thoroughly cleaning the air. In dry filter booths, paint laden air is passed through filters such as fibrous filters to remove the paint particles therefrom. Of course, once sufficient paint has been accumulated in the filters, the filters cake up and are rendered useless. Filters from a dry filter booth may have to be changed daily with resulting expense in labor and filter material.

Wet filtering or washing of air alleviates the necessity for constantly changing filters. However, heretofore wet washing booths have been less than completely satisfactory.

In order that paint particles be carried through the booth sufficient suction is required to insure that paint particles not exit the booth through the user portal. Furthermore, the air flow through a booth should be uniform in order that the articles may be uniformly painted. Prior art wet booths have employed solid sheets of water and/or sprays to remove paint particles from the air.

A spray or mist of water alone is generally insufficient to adequately remove paint particles from air. Even when washed by a heavy spray, enough paint particles may pass through the spray untouched by the water.

A solid sheet of water is provided in booths of the type wherein water cascades down a solid sheet of material which terminates a distance from the bottom of the booth. The solid sheet deflects air away and a large amount of paint laden air which passes thereunder may be untouched by the sheet of water which falls from the bottom of the sheet an uneven cascade. Because the air is sucked below the sheet, a very uneven air flow develops through the user portal and around the article to be painted. The air flow in such a booth tends to be greater along the bottom of the booth so that paint spray is drawn away from the top of the article to be painted. Accordingly, the upper portions of such objects may be left substantially unpainted. Attempts to remedy uneven painting jobs by longer painting time results in increased cost and an unsatisfactory thick paint coat toward the bottom of the object. Repainting operations are expensive and should be avoided.

GB—A—710173 discloses a spray booth apparatus having a vertical flood sheet through which paint carrying air is passed and over which water flows. No provision is made for ensuring that air flows to the workpiece at a substantially constant and uniform rate. US—A—3475202 also discloses a paint spray booth having a vertical flood sheet but again no provision is made to ensure that air passing through the work area does so at a uniform and constant flow rate. US—A—2694466 discloses a paint spray booth having baffles behind the work area over which water flows and through which air from the work area is drawn to extract paint particles from the air. Again no provision is made to ensure that air flow through the work area is uniform and constant.

Some paint spray booths, such as shown in US Patent 3932151, use oil as the paint collective medium which would soon clog the fibrous air filters employed to filter the air before discharge. Once again no provision is made for ensuring a uniform and constant air flow rate through the work area of the booth.

This invention provides in a spray booth, the combination comprising: a housing means having an open front face through which air may flow into the housing means a work area in the housing to receive a workpiece first water means at the rear of said work area having a plurality of substantially vertically extending surfaces for receiving thereon a thin sheet of water, said vertically extending surface being offset in the fore and aft direction to define vertically extending slots through which air may pass from the work area, reservoir means at the bottom of the booth for holding water; means defining an upwardly extending passageway for the air having passed across the water in said reservoir; means for providing a second water wash moving downwardly through said passageway to trap airborne particles moving upwardly through said passageway, means for removing water particles from the air, and means for conveying the cleaned air from said second water wash; characterised in that the housing means open front face is formed to provide a constant velocity air flow at the work area; and in that means are provided for directing the air flow downwardly at a substantially uniform velocity from the area behind said first water means including panel means spaced from said vertically extending surfaces to define a downwardly increasing cross-sectional area into which air may flow from between said vertically extending surfaces.

In accordance with the invention, a substantially constant flow of air of substantially uniform velocity is caused to flow across the open front face of the housing and across the workpiece in the work area to the first water wash. The air then flows downwardly through an increasing cross-sectional area between the water wash surfaces and a rearward air-deflecting panel. the constant and uniform air flow through the work area resulting from the open front of the housing leading to the work area and the panel located behind the vertical washing surfaces and arranged to provide a downwardly increasing cross-sectional area in which water flows from the vertical washing surfaces to a reservoir at the bottom of the panel. This arrangement eliminates differential air flows or turbulence at the workpiece which arise in the prior art.

A spray booth according to the invention can be constructed to meet an industrial standard of 3 grains per thousand cubic feet per minute at a reasonable price and in which the air flow and air velocity remains substantially constant, even with heavy volume or paint useage in the paint spray booth.

The following is a description of a specific embodiment of the invention, reference being made to the accompanying drawings in which:

Figure 1 is a perspective view, partially cut away, of a spray booth for practicing the method and embodying the novel features of the present invention;

Figure 2 is a cross-sectional view of the booth shown in Figure 1;

Figure 3 is a front elevation view of the booth shown in Figure 1;

Figure 4 is a fragmentary and expanded cross-sectional view of the water sheet panels as taken generally along line 4—4 of Figure 3;

Figure 5 is an enlarged fragmentary cross-sectional view of an upper reservoir from which the water flows to the view sheet.

As shown in the drawings for purposes of illustration, the invention is embodied in a spray booth 10 in which is article 11 for being sprayed from a spray device 13 in a front section 12. Often a conveyor means 41 carries the work past the spray device which may be an automatic spray device 13 or may be a manually operated spray device. The present invention will be described in connection with a paint spray device 13 although the spray booth 10 may be used for other purposes than paint spraying. Whether the spray is electrostatic or a pressurized air stream of paint particles, some of the solid airborne spray particles will not adhere to the article and will pass from the work area to a first water wash means 20 at which airborne particles are removed from the air and then through a second water wash means 22 in a rear section 16 before being discharged from the booth out of an exhaust chimney or duct 28 which is connected to a blower or fan (not shown) to pull the air through the booth. In a typical electrostatic paint spray booth, there is usually a predetermined minimum air velocity of at least 50 feet per minute at a front face or portal 14 for the spray booth. The required velocity, which is often 75 to 100 fpm, assures that the airborne paint particles do not flow in a reverse direction through the front face 14 but are carried through the water wash means.

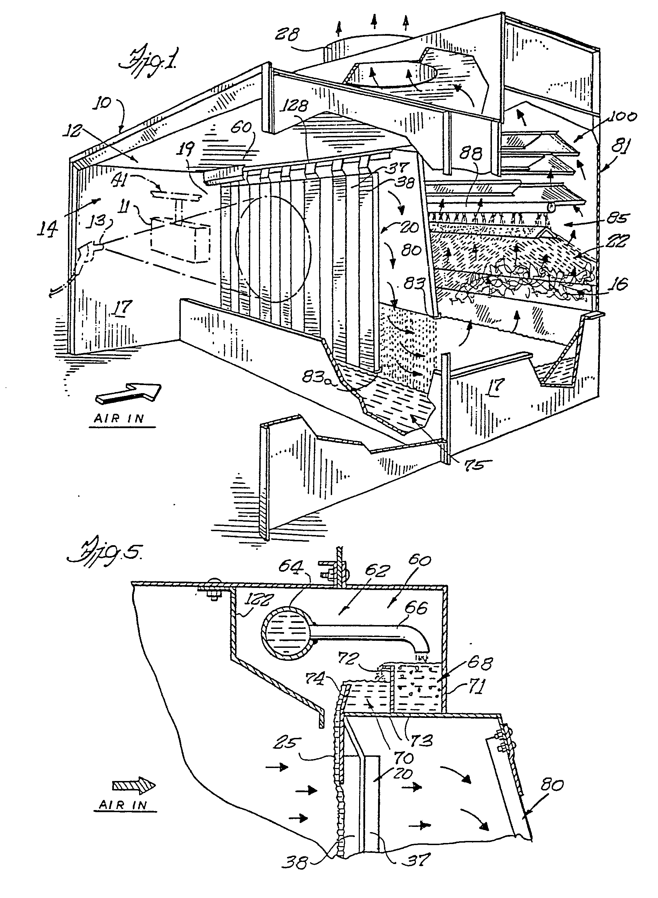

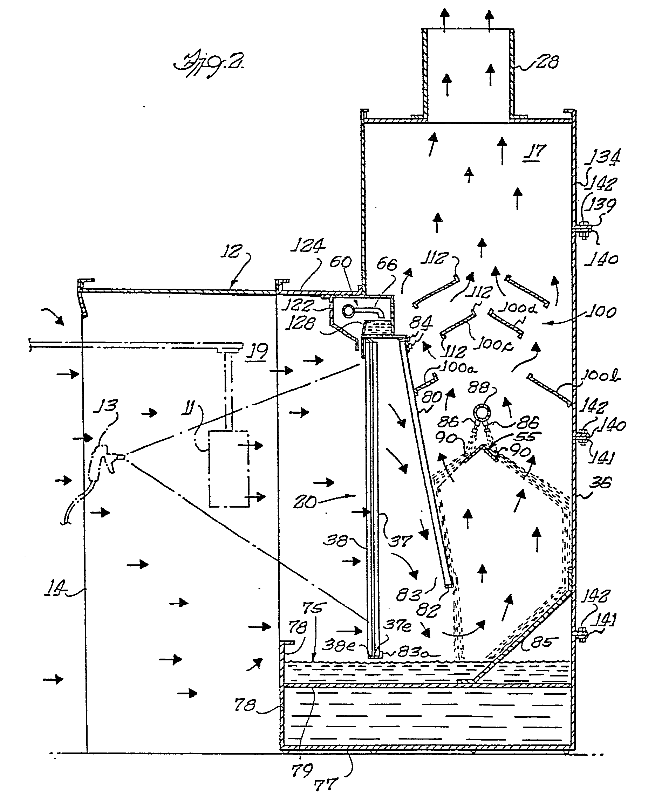

Usually, in conventional spray booths, a nozzle means at top and rear of the spray booth provides a downward spray of water through which the airborne paint particles pass generally at the lower and rearward portion of the spray booth before turning to flow upward through a secondary spray before exiting through the exhaust duct. One particular problem with such booths is the lack of uniform air velocity with a very noticeable decrease in air velocity in an upper rearward portion 19, shown in FIGURE 2, at which the air velocity may be only 10 to 15 fpm. This is in contrast to a preferred 100 fpm at the lower rearward portions of the work area in these conventional booths. One result of such non-uniform area flow at upper rear portions of the booth is to cause a difficulty in painting the tops of some articles with sufficient paint or with a coat of paint uniformly thick over the entire article. Of course, such spray booths may be operating at high production rates and the failure to adequately paint even a small percentage of the articles is a major problem because of the high cost of reworking and for repainting the articles on a piece work basis. Some paint spray people use the dry filters at the rear of the booth in a large flat face with air being pulled through a large vertical face formed of banks of fibrous filters. While a more uniform air flow velocity across the top of the article 11 is achieved with such dry filters in a spray booth, the dry filters quickly become clogged in high paint usage booths and often have to be cleaned at daily intervals or less. The high cost of the filters and the maintenance labor costs attendant in replacing the filters as well as down time for filter changing results in a system that is costly.

Spray booths having first and second spray washes, as above-described, are having a more difficult time meeting government standards on the amount of paint particles that can be discharged from the paint spray booth. Too large a number of particles pass through the water spray without being hit and trapped by a water droplet. Further, the above-described lack of uniform air flow, as in a dry filter spray booth, also is a serious problem for these spray booths.

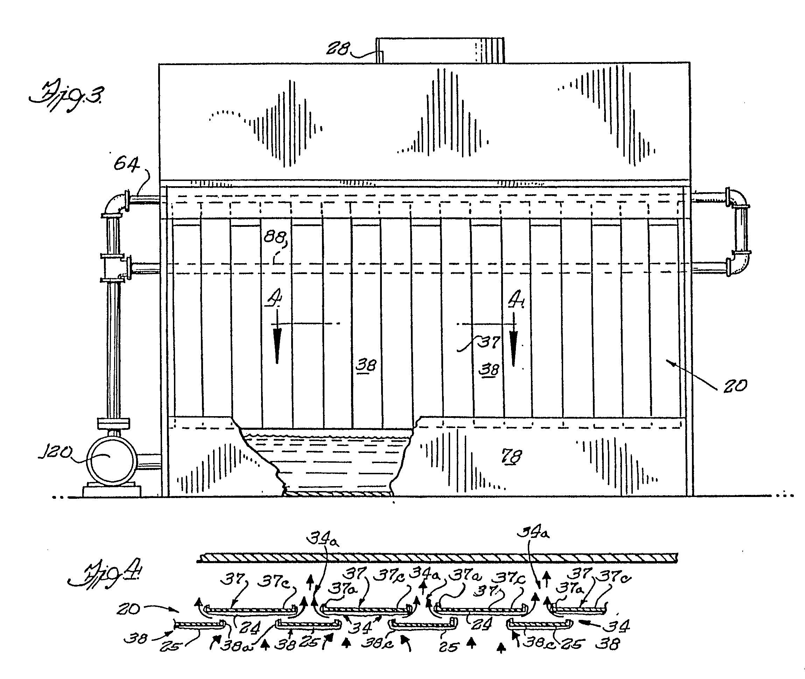

In accordance with the present invention, there is provided an improved method of cleaning airborne particles from the air to meet these more stringent government standards and to provide a more uniform air velocity across the article 11. This is achieved by the method comprising the steps of: creating a substantial horizontal air flow of substantially uniform velocity across the front face 14 of the booth, cascading water at the first water wash means 20 in staggered sheets 24 and 25 overlapping each other in a lateral direction and flowing downwardly along vertical planar surfaces (FIGURE 4), impinging airborne particles against the staggered sheets for being trapped thereby and redirecting the air flow at said sheets laterally through slots 34 defined between adjacent overlapped edges of the vertical planar surfaces and from the work area, and drawing the air from the first water wash means 20 and flowing the air through the second water wash means 22 to remove additional airborne particles from the air. The slots 34 extend the entire height of the rear of the work area to allow air to flow through the upper rear end 19 of the work area and front section unlike other spray booths, thereby preventing an air dead space as in prior booths. Also, the overlapping water sheets 24 and 25 appear to provide a substantially interdicting wall of water to the rearwardly traveling air and airborne particles.

In the preferred embodiment of the invention, the water sheets 24 and 25 of water are very thin films of water which cover the entire vertical surfaces of a plurality of vertically extending panels 37 and 38 which have their edges 37a and 38a overlapped in a vertical and lateral direction to define the slots 34. Preferably, a tortuous path to create air turbulence and contact between the airborne particles is achieved by use of channel shaped panels 37 and 38, each having their central webs 37c and 38c facing each other and overlapping to prevent straight rearward flow of air causing the air to flow laterally therebetween, as best seen in FIGURE 4. Most of the water comprising the water sheets 24 and 25 is on the front facing sides or surfaces of these central webs 37c and 38c but the water also covers the flanges, as will be explained in detail hereinafter.

To facilitate understanding of the present invention, the invention will now be described in greater detail.

The open front face 14 at the front of the booth 10 allows the user to direct the paint spray gun 13 at the article 11 within the booth. The portal 14 must be sufficiently wide so that an article of manufacture may be spray painted from various angles so as to fully coat the article. Accordingly, the portal 14 is broad and may substantially comprise the entire front face of the first section 12 of the booth 10. Objects to be painted are suspended in front of the user as, for example on hooks on an overhead conveyor 41 which passes through sidewalls 17 of the booth. Alternatively the article may be manually handled and support on a table in front of the user. Electrical conducting means may also be provided to permit electrostatic spraying of the article. The first water wash means 20 comprises the primary cleaning means and covers an apparent back surface of the painting or work area for the front section 12 of the booth 10.

To provide a tortuous and turbulent flow path of air through the first water wash means, as best seen in FIGURE 4, each of the panels 37 and 38 has a pair of vertical peripheral flanges 37a and 38a projecting orthogonal to an integral central web 37c or 38c. The flanges 27a and 38a of the both sets of cascade panels 37 and 38 are directed towards the back of the booth 10. It has been found that when the flanges 37a are directed in the opposite direction from that shown herein, that is, the flanges 37a face forwardly, and when the flanges 37a and 38a are positioned sufficiently close together that a plane extending laterally and located midway between the webs 37c and 38c would intersect all of the flanges 37a and 38a, that paint began to collect on the facing edges of the flanges and bridge the flanges. Such bridging paint reduced substantially the air flow through the water curtain. Such a paint bridging has been eliminated with the flanges 37a and 38a both facing rearwardly as illustrated herein.

The larger spray paint particles from the pressurized spray gun will either hit the first set of cascade panels 38 or pass therebetween to hit the second set of cascade panels 37. Upon contacting the sheets of water on the panels, the paint droplets will be carried by the water to the bottom of the booth 10. This arrangement of the water sheets insures sufficient air-water contact to remove most of the air-dispersed particles. A sizeable percentage of the paint laden air will contact the sheets of water on the webs 37c and 38c.

Some of the air flows laterally across the water or front face 38c of the panels 38 while the remaining air flows between the front panels edges 38a toward the rear panel face 37c. The air then must flow laterally through the gaps 34 to exit at slots 34a between facing flanges 37a of the rear panels 37. This sweeping across the wet panel surfaces, and changes in direction of air flow, results in air turbulence. The turbulence causes increased air-water contact. The water covers the entire outward surfaces of the faces 37c and 38c and flanges 37a and 38a to wash away paint particles.

The panels 37 and 38 are generally vertically disposed but may be slightly inclined forwardly with the tops of the panels 37 and 38 disposed rearwardly of the booth 10, as best seen in FIGURE 2.

In accordance with an important aspect of the invention, water is made to flow in thin sheets on the panels without large areas of discontinuities from a reservoir means 60. The latter includes (FIGURE 5), an inlet manifold 62 comprised of a pipe 64 extending across the booth 10 with a plurality of nozzles 66 extending horizontally therefrom. A manifold fourteen feet long may have eight nozzles 66. Preferably, the upper reservoir means 60 consists of a first upper reservoir 68 to which water is supplied by the manifold 62, and a second upper reservoir 70 from which water flows to the panels 44. Because the manifold 62 is supplied by water with appreciable pressure, undesirable eddy currents are generated around the nozzles 66 of the manifold 62. The two-part upper reservoir means 60 substantially eliminates the effects of the eddy current. Water overflows the upper laterally extending edge of weir 72 (FIGURE 5), which forms a water holding reservoir with walls 71 and 73, of the first upper reservoir 68 into the second upper reservoir 70, the first weir or dam means 72 extending generally the width of the booth. The turbulent effects of the inlet current are lessened by having the waterfall current flowing in an opposite direction to the current from the nozzles 66. Furthermore, the flow of water is widely distributed over the width of the first dam means 72 thus dispersing water turbulence. Turbulence generated by the waterfall is very slight as the water falls only a matter of inches into the second upper reservoir 70. The second reservoir is defined by the bottom wall 73, the dam means 72 and a second dam means 74. The water in the second upper reservoir 70 overflows the second weir or dam means 74 to provide a continual thin sheet flow along the panels 37 and 38. The effect of the eddy currents created by the nozzles 66 of the inlet manifold 62 are essentially eliminated when the water reaches the panels and water is caused to flow in generally flat uniform sheets fron the front faces of the panels.

A lower water reservoir 75 receives the water from the panels 37 and 38 and is bounded by the sidewalls 17 of the booth 10 on the sides and in front by a short vertical panel base 78. A bottom wall 79 for the reservoir as illustrated may be elevated a short distance from a floor wall 77. The reservoir 75 covers substantially the entire rear and bottom portion of the booth and extends to a back wall 36 for the booth. Water is recirculated from the reservoir 75 to the first and second water wash means 20 and 22.

An air deflector means 80 is provided behind the first water wash means 20 to direct the air which has passed through its sheets of water toward the bottom of the booth 10. The deflector means 80 is a generally flat sheet which slants towards the back of the booth 10 from the top toward the bottom to provide a greater air space behind the flood sheet 24 at the bottom of the booth 10 where the deflected air concentrates. The bottom edge 82 of the deflector is spaced above the lower reservoir 75 to allow the air flow thereunder. The downwardly directed air passes over and contacts the water which accumulates in the lower reservoir 75 at the bottom of the booth 10. Some air cleaning may take place at the surface of the lower reservoir 75, if paint particles contact the surface of the water. The deflector means 80 is easily removable from the booth. Its lower end 82 merely rests in an angle 83 extending between sidewalls 17 and its upper edge is fastened by fasteners 84 to the booth wall.

Herein, the lower ends 37e and 38e of the panels 37 and 38 are spaced slightly above the surface of the water in the lower reservoir to avoid accumulation of paint thereon due to floating paint particles on the water surface hitting the panels. In operation, the water falling from the panels and the air cause the water to splash about the panel ends so that the air passing beneath the lower ends is also washed. The air passing under the panels has the longest upward path of travel through the secondary wash so that it will be cleaned.

The air which has passed through the upper part of the first water wash flows down below the deflector 80 and is pulled upward through the secondary washing means 22 to remove paint particles which have eluded the primary cleaning means 20. To aid in directing the air upward a flat panel reflector 85 extends below from the back wall 81 and the lower reservoir floor 79 at about a 45° angle.

The secondary cleaning means 22 uses a high velocity downward spray or sheet of water, in which upwardly directed air is cleaned as paint particles are caught by the downwardly directed spray 85. The spray 85 is developed by jets or streams of water splashing over a splash plate 55. The streams of water are provided by a plurality Vee jet of nozzles 86 which are arranged in pairs each located at 15° to the true vertical and are carried by a spray manifold 88 which extends across the width of the booth 10. The manifold 88 may be 3 to 4-inch pipe and the nozzles 86 are located about every 3 inches along the manifold 88. The splash plate 55 is comprised of two plates 90 which angle downward from a common peak located directly under and several inches from the nozzles 86. The nozzle-splash plate combination is preferred for use in paint spraying booth 10 as the splash plate 55 shields the nozzles 86 from the paint laden air to prevent the spray nozzles 86 from becoming clogged with paint. Herein, the water is pumped with a pressure pump having a 70-foot head and with a large volume of water issuing from the nozzles, for example, 40 gallons per linear foot (5.78 l/cm) of manifold pipe. Thus, for a ten-foot (304.8 cm) long booth approximately 400 gallons per minute (1762 l/min.) are sprayed and at a high velocity. The spray from the splash plate expands from about 3 to 5-inches (7.6 to 12.7 cm) to several feet (1 foot = 30.48 cm) in width between the deflector plate and the rear wall of the booth.

Increased contact between airborne particles and the spray 30 is achieved by slowing down the air from about 1000 cfm (28.3 m³/min.) to 200 cfm (5.66 m³/min.) as it flows upwardly through the spray 30. More specifically, the cross-sectional area of the passageway increases in an upward direction to slow down the air velocity to give the high velocity downward traveling water particles a chance to hit and trap paint particles.

A plurality of baffles 100 interdict the upward flow of air to cause water particles from the spray to be removed from the air prior to exhaust through the duct 28. The baffles 100 are generally flat sheets extending from one side wall 17 to the other side wall 17 of the booth 10. The baffles slant upwardly toward the exhaust duct 28 which is centrally located at the top of rear section 16 of the booth 10.

Longitudinal flanges 112 depend generally perpendicularly from each edge of the baffles 100. The flanges 112 provide added rigidity to the long baffles which may be supported only at their ends by the booth side walls 17. The flanges 112 at each upper baffle edge depend upwardly so as not to interfere with air flow and the flanges 112 at each lower baffle depend downwardly so that water does not collect on the upper surfaces of the baffles 100.

A first pair of baffles 100 are located near the front and rear of second section, one baffle 100a being positioned adjacent to the deflector 80 and the other 100b being adjacent to the back panel. The first pair of baffles 100 directs the air flow inwardly, the air flow having diverged around the spraying manifold 88. A second pair of baffles 100c and 100d is located toward the middle of the rear section. Additional baffles may optionally be provided to increase air-baffle contact. The cross-sectional area of the passageway above the baffles 100 is larger than cross-sectional area of the baffle zone to reduce the air velocity and thereby the ability of the air to carry off water and/or paint particles. Substantially clean air is exhausted through the exhaust chimney 28 which is connected to the air flow generating means (not shown) which draws the air through the booth 10.

Water in the booth 10 is continually recirculated. Water is withdrawn from the lower reservoir 75 by a pump means 120 (FIGURE 3), and pumped to the inlet manifold 62 for the upper reservoir means 60 and to the spray manifold 88. While a filter means (not shown) may be provided to protect paint particles from clogging the pump means 120, withdrawal of the water generally at the bottom of the lower reservoir 75 helps to keep the pump means 120 free of the paint particles which tend to float on the surface of the lower reservoir 28.

As the booth 10 is intended to retain substantially all stray paint, the booth quickly accumulates sizeable amounts of paint material. The booth 10 is constructed so as to facilitate cleaning and maintenance.

While wet surfaces are inherently protected from paint accumulations, other surfaces may need to be protected and/or periodically cleaned. Shields may be used to protect critical surfaces from paint. A shield 122 depends from the roof 124 of the first section to keep paint from the upper reservoir means 60.

The bulk of paint particles washed from the air accumulate in the lower reservoir 75 and must be periodically removed. To facilitate removal of crud from the lower reservoir as well as to permit cleaning of the panels 37 and 38, the panels are joined together in a unit which may be lifted from the booth 10. At the bottom, the panels 37 and 38 rest in the U-shaped channel 83 which extends generally across the width of the booth 10. At the top the panels 37 and 38 are hooked to the second dam means by upper hook ends 128 inturned flanges of which hook over the upper edge of the front wall 74 of the second dam means.

While the paint accumulates primarily in the lower reservoir, paint also accumulates elsewhere in the booth. To provide access for cleaning and/or maintenance, the rear wall 81 of the booth 10 is constructed of a plurality of panel 139, 140, and 141 which extend outwardly in planes perpendicular to their respective panel sections. Fastening means such as bolts 142 connect the flanges of adjacent panel sections. Access to the booth 10 may be obtained by unbolting and removing a panel section.

It is preferred that the panels 37 and 38 have their water carrying surfaces formed of a material which assists in forming and maintaining a continuous and thick water film. To this end the panels 37 and 38 have been coated with a particulate layer such as a sand filled paint which provided increased surface area and a rougher surface for the water than does a smooth flat surface. While such a surface aids in the water film carrying capabilities for the panels, it has been found to be somewhat expensive in that the panels had to be manual painted. The usual paints for spraying booths are enamel paints which provide good rust protection but which appear to be hydrophobic in that water beads up on the paint thereby lessening the water film and its continuity on the surfaces of the panels 37 and 38. On the other hand, it has been found that the use of flat paints, which appear to be hydrophyllic in that the water does not bead thereon and surface "wets" more easily, provides a more continuous and thicker water film on the surfaces of the panels 37 and 38. Thus, the present invention may use various and different materials on the surfaces of the panels to aid in providing a thick and continuous film of water on the panels.

### Claims

1. In a spray booth, the combination comprising: a housing means (10) having an open front face (14) through which air may flow into the housing means a work area in the housing to receive a workpiece, first water means (20) at the rear of said work area having a plurality of substantially vertically extending surfaces (37, 38) for receiving thereon a thin sheet of water, said vertically extending surface being offset in the fore and aft direction to define vertically extending slots (34a) through which air may pass from the work area, reservoir means (75) at the bottom of the booth for holding water, means (85, 36, 17) defining and upwardly extending passageway for the air having passed across the water in said reservoir, means for providing a second water wash (22) moving downwardly through said passageway to trap airborne particles moving upwardly through said passageway, means (100a,b,c,d), for removing water particles from the air, and means (28) for conveying the cleaned air from said second water wash, characterised in that the housing means open front face (14) is formed to provide a constant velocity air flow at the work area, and in that means (8) are provided for directing the air flow downwardly at a substantially uniform velocity from the area behind said first water means (20) including panel means (80) spaced from said vertically extending surfaces (37, 38) to define a downwardly increasing cross-sectional area into which air may flow from between said vertically extending surfaces.

2. A spray booth in accordance with claim 1 characterised in that the panel means (80) includes a panel (80) inclined rearwardly and downwardly and across which spray from said second water wash (22) flows and drops from its lower edge (82) to create a water wash intermediate said first and second water washer.

3. A spray booth in accordance with claim 1 or claim 2 characterised in that said vertically extending surfaces (37, 38) in said first water means (20) are overlapped in the lateral direction at their adjacent edges and said vertically extending slots (34a) are defined by said overlapped edges.

4. A booth in accordance with any of claims 1 to 3 characterised in that said vertically extending surfaces (37, 38) cover substantially the rear of the work area and terminate in lower ends, said lower ends being located slightly above the surface of the water in said reservoir means (75).

5. A booth in accordance with any of claims 1 to 4 characterised in that said second wash means comprises nozzles (85, 86) offset from a vertical, and a splash plate (85) below said nozzles to receive water sprays from the nozzles to form a water sheet.

6. A method of conveying airborne particles in a spray booth and to clean the same from the air, said method comprising the steps of: creating a substantially horizontal air flow of substantially constant velocity across an entire open front vertical face of a work area of spray booth for flowing rearwardly to a rearward side of a work area in said booth; cascading water in staggered sheets overlapping each other in a lateral direction and flowing the water downwardly across the horizontal flow of air, impinging airborne particles against the downwardly flowing water and redirecting the air flow and drawing the air through vertically extending slots defined between said cascading water sheets and from said work area, directing air flow downwardly through a passage of increasing cross-sectional area toward the bottom of the booth, directing the air flow upwardly providing a second water wash, drawing said air through said second wash to remove further particles from said air, removing water spray from the air, reducing the velocity of air flow, and discharging the cleaned air.

7. A method in accordance with claim 6 characterised in that the air velocity is reduced substantially before discharge.

8. A method in accordance with claim 7 characterised in that the air velocity is reduced from about 1000 cfm (28.3 m³/min.) to 200 cfm (5.66 m³/min.) at discharge.

9. A method in accordance with any of claims 6 to 8 characterised in that the air velocity remains substantially constant across the workpiece and at discharge from the spray booth through a work day.

10. A method in accordance with any of claims 6 to 9 including the step of sweeping the air across the surface of the water in a reservoir means to remove paint particles between said first and second water wash means.

11. A method in accordance with claim 10 characterised in that in said second water wash, the water is being sprayed at a rate of about 40 gallon per lineal foot (5.78 l/cm) and in which said upwardly flowing air is passing through several feet (1 foot = 30.48 cm) of downwardly directed high velocity spray in said second water wash.

## Revendications

1. Dans une cabine de pulvérisation, la combinaison comprenant: un moyen d'enceinte (10) présentant une face avant ouverte (14) à travers laquelle de l'air peut s'écouler dans le moyen d'enceinte, une zone de travail prévue dans l'enceinte pour recevoir une pièce, de premiers moyens à eau (20) à l'arrière de ladite zone de travail comportant une pluralité de surfaces s'étendant sensiblement verticalement (37, 38) pour recevoir sur elles une mince lame d'eau, lesdites surfaces s'étendant verticalement étant décalées dans la direction avant arrière pour définir des fentes s'étendant verticalement (34a) que de l'air peut traverser à partir de la zone de travail, un moyen formant réservoir (75) à la base de la cabine pour contenir de l'eau, des moyens (85, 36, 17) définissant un passage s'étendant vers le haut pour l'air ayant passé au travers l'eau dans ledit réservoir, des moyens de réalisation d'un second lavage à l'eau (22) se déplaçant vers le bas à travers ledit passage pour emprisonner les particules en suspension dans l'air se déplaçant vers le haut à travers ledit passage, des moyens (100a,b,c,d) pour éliminer des particules d'eau de l'air, et des moyens (28) pour le transport de l'air épuré à partir dudit second lavage à l'eau, caractérisée en ce que la face avant ouverte (14) du moyen de logement est configurée pour délivrer un flux d'air à vitesse constante à la zone de travail, et en ce que des moyens (8) sont disposés pour diriger le flux d'air vers le bas à une vitesse sensiblement uniforme à partir de la zone sitée derrière lesdits premiers moyens à eau (20) comprenant des moyens formant panneaux (80) espacés desdites surfaces s'étendant verticalement (37, 38) pour définir une zone à section augmentant vers le bas dans laquelle de l'air peut pénétrer depuis des espaces entre lesdites surfaces s'étendant verticalement.

2. Cabine de pulvérisation selon la revendication 1, caractérisée en ce que les moyens formant panneau (80) comportent un panneau (80) incliné vers l'arrière et vers le bas et en travers duquel de l'eau pulvérisée dudit second lavage à l'eau (22) coule et tombe de son bord inférieur (82) pour créer un lavage à l'eau intermédiaire entre lesdits premier et second lavages à l'eau.

3. Cabine de pulvérisation selon la revendication 1 ou 2 caractérisée en ce que lesdites surfaces s'étendant verticalement (37, 38) desdits premiers moyens à eau (20) se recouvrent latéralement par leurs bords voisins et lesdites fentes s'étendant verticalement (34a) sont définies par lesdits bords en recouvrement.

4. Cabine selon l'une quelconque des revendications 1 à 3, caractérisée en ce que lesdites surfaces s'étendant verticalement (37, 38) couvrent sensiblement l'arrière de la zone de travail et se terminent par des extrémités inférieures, lesdites extrémités inférieures étant situées légèrement au-dessus de la surface de l'eau présente dans ledit moyen-réservoir (75).

5. Cabine selon l'une quelconque des revendications 1 à 4, caractérisée en ce que lesdits seconds moyens de lavage comprennent des buses (85, 86) décalées par rapport à la verticale et une plaque déflectrice (85) située sous lesdits ajutages pour recevoir des pulvérisations d'eau des buses pour former une lame d'eau.

6. Procédé pour transporter des particules en suspension dans l'air dans une cabine de pulvérisation et pour en débarrasser l'air par épuration, ledit procédé étant caractérisé par les opérations consistant à: créer un flux d'air sensiblement horizontal à vitesse sensiblement constante à travers d'une face verticale avant entièrement ouverte d'une zone de travail de cabine de pulvérisation pour qu'il s'écoule vers l'arrière vers un côté arrière d'une zone de travail située dans ladite càbine; faire cascader de l'eau en lame décalées se recouvrant les unes les autres latéralement et faire s'écouler l'eau vers le bas en travers du flux d'air horizontal, faire frapper les particules en suspension dans l'air contre l'eau s'écoulant vers le bas et réorienter le flux d'air et attirer l'air à travers des fentes s'étendant verticalement définies entre lesdites lames d'eau cascadant et à partir de ladite zone de travail, diriger le courant d'air vers le bas à travers un passage à aire de section transversale augmentant vers la base de la cabine, diriger le courant d'air vers le haut en disposant un second lavage à l'eau, attirer ledit air à travers ledit second lavage pour éliminer de nouvelles particules dudit air, éliminer l'eau pulvérisée de l'air, réduire la vitesse du courant d'air, et évacuer l'air épuré.

7. Procédé selon la revendication 6, caractérisé en ce qu'on réduit sensiblement la vitesse de l'air avant évacuation.

8. Procédé selon la revendication 7, caractérisé en ce qu'on ramène la vitesse de l'air d'environ 1000 cfm (28,3 m³/mn) à 200 cfm (5,66 m³/mn) à l'évacuation.

9. Procédé selon l'une quelconque des revendications 6 à 8, caractérisé en ce que la vitesse de l'air demeure sensiblement constante par le travers de la pièce et à l'évacuation hors de la cabine de pulvérisation au cours d'un jour de travail.

10. Procédé selon l'une quelconque des revendications 6 à 9, caractérisé en ce qu'il comporte l'opération consistant à faire balayer par l'air la surface de l'eau présente dans un moyen-réservoir pour extraire des particules de peinture entre lesdits premier et second moyens de lavage à l'eau.

11. Procédé selon la revendication 10, caractérisé en ce que dans ledit second lavage à l'eau, l'eau est pulvérisée à raison d'environ 40 gallons par pied linéaire (5,78 l/cm) et en ce que ledit air s'écoulant vers le haut est acheminé à travers plusieurs pieds (1 pied = 30,48 cm) d'eau pulvérisée dirigée vers le bas à grande vitesse dans ledit second lavage à l'eau.

**Patentansprüche**

1. In einer Spritzkabine, die Kombination, die: eine Gehäuseeinrichtung (10) mit einer offenen Vorderseite (14), durch die Luft in die Gehäuseeinrichtung strömen kann, einem Arbeitsbereich im Gehäuse zur Aufnahme eines Werkstückes, einer ersten Wassereinrichtung (20) am hinteren Teil des Arbeitsbereiches mit einer Vielzahl von im wesentlichen vertikal verlaufenden Flächen (37, 38) zur Aufnahme einer dünnen Wasserschicht, wobei die vertikal verlaufenden Flächen in Richtung nach vorn und nach hinten versetzt sind, um vertikal verlaufende Schlitze (34a) zu begrenzen, durch die die Luft vom Arbeitsbereich gehen kann, und einer Sammelbehältereinrichtung (75) am Boden der Kabine zum Halten von Wasser, eine Einrichtung (85, 36, 17), die einen nach oben verlaufenden Durchgang für die Luft begrenzt, die quer über das Wasser im Sammelbehälter gegangen ist, eine Einrichtung, die einen zweiten Wasserwaschstrom (22) liefert, der sich durch den Durchgang nach unten bewegt, um lufttransportierte Teilchen einzufangen, die sich nach oben durch den Durchgang bewegen, eine Einrichtung (100a,b,c,d) zum Entfernen der Wasserteilchen von der Luft, und eine Einrichtung (28) zum Abführen der gereinigten Luft vom zweiten Wasserwaschstrom umfaßt, dadurch gekennzeichnet, daß die offene Vorderseite (14) der Gehäuseeinrichtung so ausgebildet ist, daß eine Luftströmung mit konstanter Geschwindigkeit am Arbeitsbereich geliefert wird, und daß Einrichtungen (8) vorgesehen sind, die die Luftströmung mit im wesentlichen gleichmäßiger Geschwindigkeit vom Bereich hinter der ersten Wassereinrichtung (20) nach unten lenkt und eine Platteneinrichtung (80) enthält, die im Abstand von den vertikal verlaufenden Flächen (37, 38) liegt, so daß ein Bereich mit nach unten zunehmender Querschnittfläche begrenzt ist, in den die Luft vom Bereich zwischen den vertikal verlaufenden Flächen strömen kann.

2. Spritzkabine nach Anspruch 1, dadurch gekennzeichnet, daß die Platteneinrichtung (80) eine Platte (80) enthält, die schräg nach hinten und nach unten verläuft und über die vom zweiten Wasserwaschstrom (22) ein Sprühstrom fließt und von der Unterkante (82) herunterfällt, um ein Wasserwaschen zwischen der ersten und der zweiten Wasserwascheinrichtung zu bewirken.

3. Spritzkabine nach Anspruch 1 oder Anspruch 2, dadurch gekennzeichnet, daß die vertikal verlaufenden Flächen (37, 38) in der ersten Wassereinrichtung (20) einander in seitlicher Richtung an ihren benachbarten Kanten überlappen und die vertikal verlaufenden Schlitze (34a) von den genannten überlappten Kanten begrenzt sind.

4. Kabine nach einem der Ansprüche 1 bis 3, dadurch gekennzeichnet, daß die vertikal verlaufenden Flächen (37, 38) im wesentlichen die Rückseite des Arbeitsbereiches überdecken und in unteren Enden münden, wobei die unteren Enden sich etwas oberhalb der Wasseroberfläche in der Sammelbehältereinrichtung (75) befinden.

5. Kabine nach einem der Ansprüche 1 bis 4, dadurch gekennzeichnet, daß die zweite Wascheinrichtung Düsen (85, 86), die von der Vertikalrichtung versetzt sind, und eine Spritzplatte (85) unter den Düsen umfaßt, um den Wasserstrahl von den Düsen zur Bildung einer Wasserschicht aufzunehmen.

6. Verfahren zum Abführen von lufttransportierten Teilchen in einer Spritzkabine und zum Reinigen derselben von der Luft, welches Verfahren die Schritte umfaßt: Erzeugen einer im wesentlichen horizontalen Luftströmung mit im wesentlichen konstanter Geschwindigkeit über die gesamte offene vertikale Vorderseite des Arbeitsbereiches der Spritzkabine, damit diese nach hinten zur Rückseite des Arbeitsbereiches in der Kabine strömt, Herabfließenlassen von Wasser in versetzt angeordneten Schichten, die einander in seitlicher Richtung überlappen, und Abfließenlassen des Wassers nach unten quer über die horizontale Luftströmung, Auftreffenlassen der lufttransportierten Teilchen auf das nach unten fließende Wasser und Umlenken der Luftströmung und Abziehen der Luft durch vertikal verlaufende Schlitze, die zwischen den nach unten fließenden Wasserschichten begrenzt sind, vom Arbeitsbereich weg, Richten der Luftströmung nach unten durch einen Durchgang mit zum Boden der Kabine zunehmender Querschnittsfläche, Richten der Luftströmung nach oben, Vorsehen einer zweiten Wasserwäsche, Ziehen der Luft durch die zweite Wasserwäsche, um weitere Teilchen von der Luft zu entfernen, Abführen des Wassersprühnebels von der Luft, Vermindern der Geschwindigkeit der Luftströmung und Abführen der gereinigten Luft.

7. Verfahren nach Anspruch 6, dadurch gekennzeichnet, daß die Luftgeschwindigkeit wesentlich vor dem Abführen herabgesetzt wird.

8. Verfahren nach Anspruch 7, dadurch gekennzeichnet, daß die Luftgeschwindigkeit von etwa 1000 cfm (8,3 m³/min) auf 200 cfm (5,66 m³/min) beim Abführen herabgesetzt wird.

9. Verfahren nach einem der Ansprüche 6 bis 8, dadurch gekennzeichnet, daß die Luftgeschwindigkeit über einen Arbeitstag im wesentlichen konstant über dem Werkstück und am Auslaß von der Spritzkabine bleibt.

10. Verfahren nach einem der Ansprüche 6 bis 9, einschließlich des Schrittes des Bestreichens der Wasseroberfläche in einer Vorratsbehältereinrichtung mit Luft, um Farbteilchen zwischen der ersten und der zweiten Wasserwascheinrichtung zu entfernen.

11. Verfahren nach Anspruch 10, dadurch gekennzeichnet, daß in der zweiten. Wasserwäsche das Wasser in einem Maß von etwa 40 Gallonen/Fuß (5,78 l/cm) ausgesprüht wird, und daß die nach oben strömende Luft durch mehrer Fuß (1 Fuß = 30,48 cm) des nach unten gerichteten Sprühstrahls mit hoher Geschwindigkeit in der zweiten Wasserwäsche geht.

Fig.1.

Fig.5.

AIR IN

AIR IN

Fig.2.

Fig.3

Fig.4